# EUROPÄISCHE PATENTSCHRIFT

(11) **EP 2 709 822 B1**
(45) Veröffentlichungstag und Bekanntmachung des Hinweises auf die Patenterteilung: **22.10.2014**
(21) Anmeldenummer: 12714580.3
(22) Anmeldetag: 10.04.2012
(51) Int. Cl.: B29C 49/76, B65D 1/04, B65D 81/32, B29C 49/04, B29C 49/22, B29C 49/58

(54) **VERFAHREN ZUR KALIBRIERUNG EINER AUSGIESSÖFFNUNG EINES IM EXTRUSIONSBLASVERFAHREN HERGESTELLTEN KUNSTSTOFFBEHÄLTERS**
METHOD FOR CALIBRATION OF A SPOUT OPENING OF A CONTAINER, WHICH IS PRODUCED BY AN EXTRUSION BLOW MOULDING PROCESS
PROCÉDÉ DE CALIBRAGE D'UNE OUVERTURE D'UN RÉCIPIENT, QUI EST PRODUITE PAR UN PROCÉDÉ D'EXTRUSION SOUFFLAGE

(30) Priorität: 16.05.2011 CH 825112011
(43) Veröffentlichungstag der Anmeldung: 26.03.2014
(60) Teilanmeldung: 14000095.1
(73) Patentinhaber: Alpla-Werke Alwin Lehner GmbH und Co. KG, 6971 Hard (AT)
(72) Erfinder: KÜNZ, Johann, AT-6971 Hard (AT)
(74) Vertreter: Bohest AG Branch Ostschweiz
(86) Internationale Anmeldenummer: PCT/EP2012/001545
(87) Internationale Veröffentlichungsnummer: WO 2012/156009

(56) Entgegenhaltungen:
- WO-A1-03/029103
- GB-A- 688 997
- US-A- 2 861 295
- US-A- 3 412 187
- US-A- 4 217 328
- US-A1- 2005 121 034
- US-B1- 6 602 459

## Beschreibung

Die Erfindung betrifft Verfahren zur Gewährleistung der Masshaltigkeit, insbesondere zum Kalibrieren, einer Ausgiessöffnung in bzw. an einem in einem Extrusionsblasverfahren hergestellten Kunststoffbehälter gemäss dem Oberbegriff des Patentanspruchs 1. Die Erfindung betrifft auch nach dem erfindungsgemässen Verfahren kalibrierte Kunststoffbehälter.

Die in der Vergangenheit üblichen Behältnisse aus Weiss- oder Buntblech, aus Glas oder auch aus Keramik werden in zunehmendem Masse von Behältnissen aus Kunststoff abgelöst. Insbesondere für die Verpackung fluider Substanzen, beispielsweise von Getränken, Haushaltsprodukten, Pflegeprodukten, Kosmetika usw., kommen mittlerweile hauptsächlich Kunststoffbehältnisse zum Einsatz. Das geringe Gewicht und die geringeren Kosten spielen sicher eine nicht unerhebliche Rolle bei dieser Substitution. Die Verwendung rezyklierbarer Kunststoffmaterialien und die insgesamt günstigere Gesamtenergiebilanz bei ihrer Herstellung tragen auch dazu bei, die Akzeptanz von Kunststoffbehältnissen, insbesondere von Kunststoffflaschen, beim Konsumenten zu fördern.

Die Herstellung von Kunststoffbehältern, insbesondere Kunststoffflaschen, beispielsweise aus Polyethylen oder Polypropylen, erfolgt oft in einem Extrusionsblasverfahren, insbesondere in einem Schlauchblasverfahren. Dabei wird mit einem Extrusionskopf ein Kunststoffschlauch extrudiert, in die Formkavität eines Blasformwerkzeugs eingebracht, durch Überdruck aufgeblasen, abgekühlt und entformt. Das Aufblasen eines in die Blasformkavität eingebrachten Kunststoffschlauchabschnitts erfolgt üblicherweise mit einem Kalibrierblasdorn, der durch eine Öffnung der Blasformkavität eingefahren wird. Der Kalibrierblasdorn hat einerseits die Aufgabe, Luft in den Kunststoffschlauch einzubringen, damit dieser gemäss der Blasformkavität ausgeformt wird. Andererseits dient der Kalibrierblasdorn auch zur definierten Innenausformung (Kalibrierung) des Halses des Kunststoffbehälters, an dem die Ausgiessöffnung vorgesehen ist. Diese formgebende Funktion des Kalibrierdorns besteht insbesondere in einer definierten Festlegung des Innendurchmessers des Halses. Dazu wird der Kalibrierblasdorn durch die Öffnung des geschlossenen Blasformwerkzeugs in den Schlauchabschnitt eingefahren. Dabei wird überschüssiges Kunststoffmaterial axial verdrängt, und der Innendurchmesser des Halses mit der Ausgiessöffnung festgelegt.

Bei Ausgiessöffnungen mit den üblichen Innendurchmessern von beispielsweise etwa 10 mm bis etwa 85 mm erweist sich diese Art der Kalibrierung als sehr praktikabel und die geforderte Masshaltigkeit ist in der Regel problemlos erreichbar. Bei kleineren Innendurchmessern von weniger als 7 mm besteht jedoch die Gefahr, dass der Kalibrierblasdorn das erweichte Kunststoffmaterial beim axialen Zustellen durch die Öffnung des Blasformwerkzeugs vor sich herschiebt und es dadurch zu einer fehlerhaften Ausbildung des Halses kommt. Dies kann besonders dann auftreten, wenn kein Kunststoffmaterial von den darüber liegendene Bereichen während der axialen Bewegung des Kalibrierblasdorns für die Kalibrierung zur Verfügung steht.

In der US 2005/0121034 ist ein Extrusionsblasverfahren für die Herstellung eines Beatmungsbeutels beschrieben, der mit einem exakt kalibrierten Anschlussstück ausgebildet ist. Zum Kalibrieren des Anschlussstücks wird ein Kalibrierblasdorn in ein in eine Blasform eingelegtes Schlauchstück eingefahren, nachdem eine Kopfplatte der Blasform geschlossen ist, jedoch noch bevor die Blasformhälften der Blasform geschlossen sind.

In der US-2,861,295 ist ein Extrusionsblasverfahren beschrieben, bei dem ein Blasdorn mit lateralem Spiel innerhalb eines inneren Rings einer Blasdüse angeordnet ist. Der Blasdorn durchsetzt dabei den Extruderkopf axial. In einer weiteren Verfahrensvariante wird ein extrudierter Schlauchabschnitt in eine Blasform mit zwei übereinander angeordneten Formkavitäten eingelegt. Zusätzlich zu dem einen Blasdorn, der aus dem Extruderkopf ragt, ist ein weiterer Blasdorn vorgesehen, der von der gegenüberliegenden Seite der Blasform in den extrudierten Schlauch eingefahren wird. Auf diese Weise können in einem Arbeitsgang aus einem extrudierten Schlauchabschnitt zwei Kunststoffbehälter aufgeblasen werden. Wie die Behälteröffnung kalibriert wird, ist in der Druckschrift nicht beschrieben.

In der US-3,412,187 ist ein klassisches Verfahren zum Kalibrieren der Ausgiessöffnung eines Flaschenhalses beschrieben. Dabei wird zunächst über einen Blasdorn, der in einen extrudierten Schlauchabschnitt eingefahren wird, der Schlauchabschnitt radial expandiert. Dabei werden an seiner Aussenseite Gewindeabschnitte gemäss der Forminnenwandung der Blasform ausgebildet. Beim weiteren Einfahren des Blasdorns wird die Halsinnenwandung gemäss einer zylindrischen Kalibrierfläche am Blasdorn kalibriert. Durch Zustellen eines den Blasdorn konzentrisch umgebenden Kalibriermantels auf die Mündung der Blasform wird auch noch die Mündung des Flaschenhalses kalibriert.

In der US-4,217,328 ist die Herstellung eines Kunststoffbehälters im Extrusionsblasverfahren, gemäß dem Oberbegriff des Anspruchs 1, beschrieben, bei dem der Behälter kurz vor dem Ende des Extrusionsblasverfahrens befüllt und danach seine Öffnungen mit aufbrechbaren Verschlüssen versehen werden. Die Öffnungen können verschieden grosse Durchmesser aufweisen. Der Behälter besitzt einen röhrchenartigen Kanal, der über einen Diffusor mit einer Hauptkammer des Behälters verbunden ist. Der röhrchenartige Kanal und die Hauptkammer des Behälters werden über zwei separat zustellbare Blasdorne aufblasbar sind. Die Blasdorne dienen zugleich auch zur Befüllung des Behälters kurz vor dem Ende des Blasverfahrens. Am Ende des Blasverfahrens wird ein oberer Teil der Blasform geschlossen, um die Öffnungen des Behälters mit den aufbrechbaren Verschlüssen zu versehen. Eine Kalibrierung der Öffnungen des Behälters ist nicht beschrieben und ist mit Hinblick darauf, dass a nur aubrechbare Verschlüsse aufweist, auch nicht erforderlich.

Noch schwieriger gestaltet sich das Kalibrieren bei Kunststoffbehältern, welche zusätzlich zu der grösseren Ausgiessöffnung eine kleinere Ausgiessöffnung aufweisen, die beispielsweise innerhalb des Kunststoffbehälters vorgesehen ist. Die kleinere Ausgiessöffnung ist beispielsweise mit einer weiteren Kammer des Kunststoffbehälters verbunden. In weiteren Ausführungsvariante kann die kleinere Ausgiessöffnung ein Austritt eines innerhalb des Kunststoffbehälters angeordneten Dosierröhrchens sein, der mit einer Dosierkammer zu verbinden ist, die üblicherweise in einen Ausgiessaufsatz integriert ist, der auf den Hals des fertig geblasenen Kunststoffbehälters aufgesetzt wird. Für das Aufblasen derartiger Kunststoffbehälter werden Doppel-Kalibrierblasdorne eingesetzt, die derart ausgebildet sind, dass die Ausgiessöffnung am Hals des Kunststoffbehälters und diejenige in die zweite Kammer bzw. in das Dosierröhrchen im wesentlichen zeitgleich ausgeformt werden.

Während das Kalibrieren der Ausgiessöffnung am Hals wegen dessen üblicherweise relativ grossen Innendurchmessers problemlos bewerkstelligbar ist, erweist sich das unmittelbare Kalibrieren der kleineren Öffnung mit dem Doppel-Kalibrierblasdorn als sehr schwierig. Aus diesem Grund erfolgt das Kalibrieren der kleineren Öffnung innerhalb des aufgeblasenen Behälters üblicherweise durch eine spanabhebende Bearbeitung, insbesondere durch Spindeln, die an den Blasvorgang anschliesst, um die geforderte Masshaltigkeit von beispielsweise bis zu ± 0,03 mm zu erzielen. Die spanabhebende Bearbeitung weist jedoch den Nachteil auf, dass Späne in das Innere des Behälters fallen und von dort wieder entfernt werden müssen. Im Fall eines Dosierröhrchens mit relativ kleinem Innendurchmesser besteht die Gefahr, dass die Späne nicht vollständig wieder beseitigt werden können. Diese behindern dann den Durchfluss durch das Dosierröhrchen und können dazu führen, dass der hergestellte Kunststoffbehälter aussortiert werden muss. Zudem stellen die spanabhebende Bearbeitung und die nachträgliche Beseitigung der Späne zusätzliche Arbeitsschritte dar, welche den Aufwand für die Herstellung des Kunststoffbehälters erhöhen.

Aufgabe der vorliegenden Erfindung ist es daher, diesen Nachteilen der Extrusionsblasverfahren des Stands der Technik abzuhelfen. Ein Extrusionsblasverfahren für Kunststoffbehälter soll dahingehend modifiziert werden, dass auch Ausgiessöffnungen mit kleineren Durchmessern ohne zusätzliche, an den Blasformprozess anschliessende Arbeitsschritte kalibriert werden können, um die geforderte Masshaltigkeit einzuhalten. Insbesondere soll es das Verfahren erlauben, auch bei Kunststoffbehältern mit einer zusätzlichen, gegebenenfalls innerhalb des Behälters angeordneten Ausgiessöffnung einer zusätzlichen Kammer oder eines Dosierröhrchens ein Kalibrieren der Ausgiessöffnungen im wesentlichen zeitgleich mit einem eingefahrenen Doppel-Kalibrierblasdorn durchzuführen.

Die Lösung dieser Aufgaben besteht in einem Verfahren zur Gewährleistung der Masshaltigkeit, insbesondere zum Kalibrieren, einer Ausgiessöffnung in bzw. an einem in einem Extrusionsblasverfahren hergestellten Kunststoffbehälter, welches die im Patentanspruch 1 aufgelisteten Merkmale aufweist. Weiterbildungen und/oder vorteilhafte Ausführungsvarianten der Erfindung sind Gegenstand der abhängigen Verfahrensansprüche.

Die Erfindung schafft ein Verfahren zur Gewährleistung der Masshaltigkeit, insbesondere zum Kalibrieren, von Ausgiessöffnungen in bzw. an einem in einem Extrusionsblasverfahren hergestellten Kunststoffbehälter. Bei dem Verfahren wird ein Abschnitt eines durch eine Extrusionsdüse ein oder mehrschichtig extrudierten Kunststoffschlauchs in eine Formkavität eines Blasformwerkzeugs eingelegt und durch einen Doppel-Kalibrierblasdorn, der zwei Kalibrierbereiche aufweist, gemäss der umschlossenen Formkavität aufgeblasen. Dabei werden zwei Ausgiessöffnungen des Kunststoffbehälters hinsichtlich ihrer Innendurchmesser und ihrer Innenkontur festgelegt, insbesondere kalibriert. Danach wird der fertig aufgeblasene Kunststoffbehälter entformt. Der Doppel-Kalibrierblasdorn wird axial in den Kunststoffschlauchabschnitt eingefahren, nachdem eine Kopfplatte des Blasformwerkzeugs geschlossen wurde, jedoch bevor das Blasformwerkzeug seine vollständig geschlossene Position erreicht hat. Die beiden Ausgiessöffnungen des Kunststoffbehälters werden im wesentlichen gleichzeitig durch den eingefahrenen Doppel-Kalibrierblasdorn kalibriert.

Das erfindungsgemässe Kalibrierverfahren unterscheidet sich von den Verfahren des Stands der Technik dadurch, dass das Kalibrieren der Öffnung durch eine radiales Quetschen erfolgt. Es wird nur die Kopfplatte des Blasformwerkzeugs vollständig geschlossen, damit der Kunststoffschlauchabschnitt sicher gehalten ist. Das Blasformwerkzeug wird nicht vollständig geschlossen. Beim Einfahren des Doppel-Kalibrierblasdorns kann der Kunststoffschlauch in radialer Richtung aufgeweitet werden. Ein axiales Wegschieben des Kunststoffschlauchs wird dadurch vermieden. Beim vollständigen Schliessen des Blasformwerkzeugs wird der Kunststoffschlauch im Bereich der beiden Kalibrierflächen des Doppel-Kalibrierblasdorns radial gequetscht. Überschüssiges Kunststoffmaterial wird dabei in axialer Richtung verdrängt. Die Verwendung eines Doppel-Kalibrierblasdorns erlaubt die gleichzeitige Kalibrierung der beiden Ausgiessöffnungen des Kunststoffbehälters. Derartige Kunststoffbehälter weisen beispielsweise zwei Kammern auf. Eine andere Art von Kunststoffbehältern kann ein im Inneren des Behälters angeordnetes Dosierröhrchen aufweisen, das im Bodenbereich mündet.

Das Kalibrieren der Ausgiessöffnungen erfolgt wie bei den bekannten Verfahren des Stands der Technik während des Aufblasvorgangs. Separate Arbeitsschritte, wie beispielsweise eine spanabhebende Bearbeitung mit anschliessender Entfernung der Späne, die erst anschliessend an den Extrusionsblasprozess vorgenommen werden, können entfallen. Das erfindungsgemässe radiale Kalibrieren kann auf konventionellen Extrusionsblasmaschinen durchgeführt werden. Das geänderte Kalibrierverfahren muss bloss in der Steuerung des Vorschubs des Doppel-Kalibrierblasdorns und des Schliessmechnismus für das Blasformwerkzeug entsprechend berücksichtigt werden.

Üblicherweise umfasst das Blasformwerkzeug zwei Blasformhälften, die etwa senkrecht zur Vorschubrichtung des Doppel-Kalibrierblasdorns aufeinander zustellbar und wieder trennbar sind. Der Doppel-Kalibrierblasdorn wird axial in den Kunststoffschlauchabschnitt eingefahren, während die Blasformhälften noch einen Abstand voneinander aufweisen, der etwa 0,5 mm bis 10 mm grösser ist, als der Innendurchmesser einer Ausgiessöffnung am Hals des Kunststoffbehälters. Durch diesen Abstand ist sichergestellt, dass der Doppel-Kalibrierblasdorn ungehindert in den Kunststoffschlauchabschnitt eingefahren werden kann, wobei dieser noch in radiale Richtung aufgeweitet werden kann. Andererseits ist der Abstand der Blasformhälften voneinander nicht zu gross, damit der Schliessvorgang in ausreichend kurzer Zeit vonstatten gehen kann. Das Schliessen der Blasformhälften erfolgt jedoch erst, wenn der Doppel-Kalibrierblasdorn axial in die gewünschte Position vorgeschoben worden ist. Der Innendurchmesser der Ausgiessöffnung am Hals des Kunststoffbehälters entspricht dabei dem Aussendurchmesser des Doppel-Kalibrierdorns in diesem Kalibrierabschnitt.

Eine Ausführungsvariante des erfindungsgemässen Verfahrens sieht vor, dass der Doppel-Kalibrierblasdorn bei noch geöffnetem Blasformwerkzeug in eine axiale Position eingefahren wird, die axial etwa 0,3 mm bis etwa 5 mm von seiner Endposition beabstandet ist. Dabei ist das Blasformwerkzeug immer noch geöffnet. Erst nachdem der Doppel-Kalibrierblasdorn die gewünschte axiale Position erreicht hat, wird das Blasformwerkzeug vollständig geschlossen. Nach dem vollständigen Schliessen des Blasformwerkzeugs wird der Doppel-Kalibrierblasdorn in seine axiale Endposition vorgeschoben. Dadurch ist sichergestellt, dass das Abtrennen des Kunststoffschlauchabschnitts erst erfolgt, wenn das Blasformwerkzeug vollständig geschlossen ist.

Der Doppel-Kalibrierblasdorn kann während des Kalibrierverfahrens intermittierend vorgeschoben werden, d.h. er wird bis zu seiner vorgesehenen axiale Position in den aufzublasenden Kunststoffschlauchabschnitt vorgeschoben, ruht während des vollständigen Schliessens des Blasformwerkzeugs und wird nach dem Schliessen des Blasformwerkzeugs in seine axiale Endposition nachgefahren. Eine alternative Verfahrensvariante sieht vor, dass der Doppel-Kalibrierblasdorn kontinuierlich vorgeschoben wird, bis er seine axiale Endposition erreicht hat, d.h. dass er auch während des Schliessvorgangs des Blasformwerkzeugs kontinuierlich axial vorgeschoben wird. Diese alternative Verfahrensvariante ist steuerungstechnisch einfacher umzusetzen. Der Doppel-Kalibrierblasdorn wird nur entweder kontinuierlich in seine axiale Endposition vorgeschoben oder nach dem Öffnen des Blasformwerkzeugs wieder in seine Ausgangsposition zurückgezogen.

Die axiale Vorschubgeschwindigkeit des Doppel-Kalibrierblasdorns beträgt etwa etwa 5 mm/s bis etwa 80 mm/s. Diese Vorschubgeschwindigkeit gilt sowohl für den intermittierenden Vorschub als auch für den kontinuierlichen Vorschub des Doppel-Kalibrierblasdorns.

Bei der Durchführung des erfindungsgemässen Verfahrens mit einem Doppel-Kalibrierblasdorn werden die Kalibrierbereiche des Doppel-Kalibrierblasdorns miteinander gekoppelt axial verschoben. Dies erfolgt einfach dadurch, dass die beiden Kalibrierbereiche des Doppel-Kalibrierblasdorns an zwei Teil-Kalibrierblasdornen vorgesehen sind, die fest miteinander verbunden sind. Dabei sind die Teil-Kalibrierblasdorne auch an eine gemeinsame Speisung für das Blasmedium, üblicherweise Luft, und eine gemeinsame Abführleitung für das aus dem aufgeblasenen Kunststoffschlauchabschnitt austretende heisse Blasmedium angeschlossen.

Durch die Verwendung eines Doppel-Kalibrierblasdorns, dessen Kalibrierbereiche in unterschiedlicher axialer Höhe angeordnet sind, können auch Ausgiessöffnungen kalibriert werden, die axial tiefer, d.h. innerhalb des aufzublasenden Kunststoffbehälters näher dem Boden liegend, angeordnet sind.

Wird ein Doppel-Kalibrierblasdorn eingesetzt, dessen Kalibrierbereiche mit voneinander verschiedenen Aussendurchmessern ausgebildet sind, können die üblicherweise einen grösseren Innendurchmesser aufweisende Ausgiessöffnung am Hals des Kunststoffbehälters und eine im Durchmesser kleinere, axial tiefer angeordnete zweite Ausgiessöffnung im Inneren des Kunststoffbehälters praktisch zeitgleich kalibriert werden.

Im Extrusionsblasverfahren hergestellte Kunststoffbehälter, deren Ausgiessöffnungen gemäss einem oder mehreren der vorstehenden Patentansprüche kalibriert worden sind, zeichnen sich durch eine sehr hohe Masshaltigkeit bei sehr geringen Toleranzen von bis zu ± 0.03 mm aus.

Besonderes zweckmässig erweist sich das erfindungsgemässe Kalibrierverfahren für die Herstellung von Kunststoffbehältern, welche wenigstens zwei Ausgiessöffnungen aufweisen, die eine hohe Massgenauigkeit aufweisen müssen. Die Anwendung des erfindungsgemässe Kalibrierverfahrens erlaubt ein sehr kostengünstiges Kalibrieren auch solcher Kunststoffflaschen.

Dabei können die Ausgiessöffnungen gleiche oder verschieden grosse Innendurchmesser aufweisen. Abhängig vom Innendurchmesser der grösseren Ausgiessöffnung kann die zu kalibrierende zweite Öffnung auch einen Innendurchmesser aufweisen, der grösser ist als 7mm.

Das erfindungsgemässe Kalibrierverfahren erweist sich insbesondere für die Herstellung von Kunststoffbehältern von Vorteil, die wenigstens eine zusätzliche Ausgiessöffnung mit einem kleineren Innendurchmesser aufweisen, die innerhalb des Kunststoffbehälters angeordnet ist. Beispielsweise ist die zusätzliche Ausgiessöffnung der Ausgang eines Dosierröhrchens, das im Bodenbereich des Kunststoffbehälters mündet. Die zusätzliche Ausgiessöffnung ist für die Kopplung an eine Dosierkammer eines Ausgiessaufsatzes ausgebildet. Dabei muss absolute Dichtigkeit gewährleistet sein. Dies ist gerade bei nach dem erfindungsgemässen Verfahren kalibrierten Öffnungen innerhalb der geforderten geringen Toleranzen von bis zu ± 0,03 mm gewährleistet.

Weitere Vorteile und Merkmale der Erfindung ergeben sich aus der nachfolgenden Beschreibung des Verfahrens unter Bezugnahme auf die schematischen Zeichnungen. Es zeigen in nicht massstabsgetreuer Darstellung:
- Fig. 1: einen Extrusionskopf mit einem extrudierten Kunststoffschlauch und einem Blasformwerkzeug mit zwei Blasformhälften in geöffneter Stellung;
- Fig. 2: das Blasformwerkzeug mit geschlossener Kopfplatte und einem von dieser gehaltenen Kunststoffschlauchabschnitt und aufeinander zugestellten Blasformhälften, die noch nicht vollständig geschlossen sind, und einen oberhalb des Blasformwerkzeugs angedeuteten Kalibrierblasdorn;
- Fig. 3: das Blasformwerkzeug mit Blasformhälften in der Position gemäss Fig. 2 und den bei geöffnetem Blasformwerkzeug axial in den Kunststoffschlauchabschnitt vorgeschobenen Kalibrierblasdorn;
- Fig. 4: eine axiale geschnittene Darstellung des Blasformwerkzeugs in der Stellung gemäss Fig. 3;
- Fig. 5: eine axial geschnittene Darstellung des Blasformwerkzeugs gemäss Fig. 4 mit vollständig geschlossenen Blasformhälften;
- Fig. 6: eine axial geschnittene Darstellung des geschlossenen Blasformwerkzeugs mit einem axial in seine Endposition nachgeschobenen Kalibrierblasdorn;
- Fig. 7: eine vergrösserte Schnittdarstellung zur Erläuterung der Position des Kalibrierblasdorns in Fig. 5;
- Fig. 8: eine vergrösserte Schnittdarstellung zur Erläuterung der Endposition des Kalibrierblasdorns in Fig. 6;
- Fig. 9: das Blasformwerkzeug mit geöffneter Kopfplatte und geöffneten Blasformhälften zum Zeitpunkt der Entformung des geblasenen Kunststoffbehälters;
- Fig. 10: eine Ansicht einer Zweikammerflasche mit zwei kalibrierten Ausgiessöffnungen; und
- Fig. 11: eine Aufsicht auf den Hals der Zweikammerflasche aus Fig. 10.

In der nachfolgenden Figurenbeschreibung bezeichnen gleiche Bezugszeichen jeweils gleiche Bestandteile.

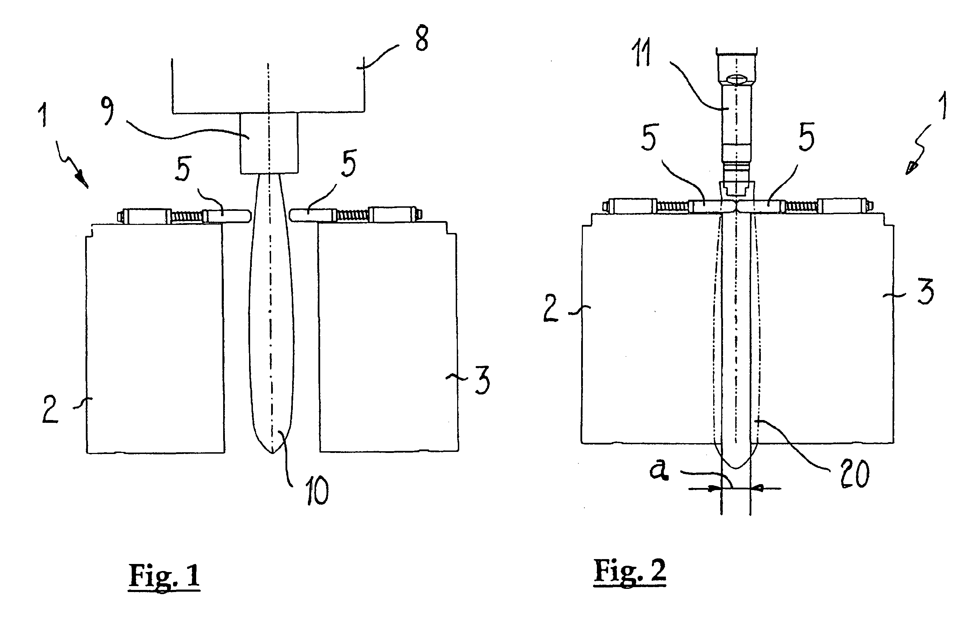

Fig. 1 zeigt ein gesamthaft mit dem Bezugszeichen 1 bezeichnetes Blasformwerkzeug einer Extrusionsblasmaschine mit zwei im geöffneten Zustand dargestellten Blasformhälften 2, 3, die im geschlossenen Zustand eine Formkavität begrenzen. An der Oberseite des Blasformwerkzeugs ist eine Kopfplatte 5 angedeutet, deren Kopfplattenelemente federbelastet sind. In alternativen Ausführungsformen des Blasformwerkzeugs kann die Verstellung der Kopfplattenelemente auch hydraulich, pneumatisch oder elektrisch erfolgen. Oberhalb des Blasformwerkzeugs 1 ist ein Extrusionskopf 8 angedeutet, aus dessen Extrusionsdüse 9 ein ein- oder mehrschichtiger Kunststoffschlauch 10 extrudiert wird.

Fig. 2 zeigt das Blasformwerkzeug 1 aus Fig. 1 bereits in der Blasstation der Extrusionsblasmaschine. Ein Kunststoffschlauchabschnitt 20 ist abgetrennt und befindet sich zwischen den beiden Blasformhälften 2, 3. Die federbelasteten Kopfplattenelemente der Kopfplatte 5 sind bereits geschlossen und halten den eingelegten Kunststoffschlauchabschnitt 20, der in den nicht sichtbaren Bereichen strichliert angedeutet ist. Die beiden Blasformhälften 2, 3 sind noch nicht vollständig geschlossen, sondern weisen noch einen Abstand a voneinander auf, der etwa 0,5 mm bis etwa 10 mm grösser ist, als der Halsinnendurchmesser des aufzublasenden Kunststoffbehälters. Oberhalb des Blasformwerkzeugs 1 ist ein Kalibrierblasdorn 11 angedeutet, der axial durch eine Öffnung (nicht dargestellt) in der Kopfplatte 5 in den Kunststoffschlauchabschnitt 20 eingefahren wird. Der Kalibrierblasdorn dient zum Aufblasen des Kunststoffschlauchabschnitts zu einem Behälter gemäss der Formkavität und zum Kalibrieren der Ausgiessöffnung des Kunststoffbehälters.

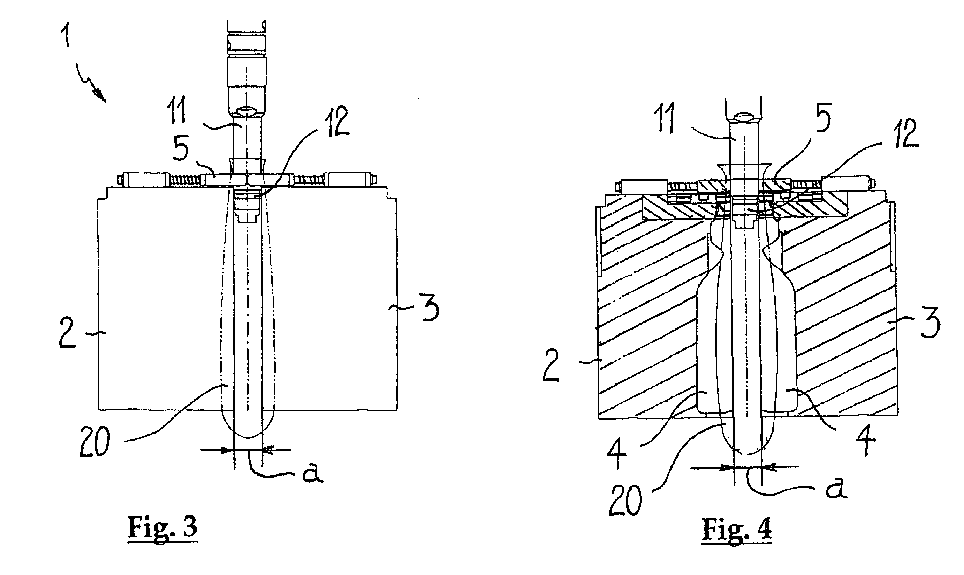

Fig. 3 zeigt den bei immer noch geöffneten Blasformhälften 2, 3 in den Kunststoffschlauchabschnitt 20 vorgeschobenen Kalibrierblasdorn 11. Die Blasformhälften 2, 3 weisen voneinander den Abstand a auf. Der Kalibrierblasdorn 11 besitzt einen Kalibrierbereich 12, der sich in der dargestellten Position bereits im späteren Halsbereich des aus dem Kunststoffschlauchabschnitts 20 aufzublasenden Kunststoffbehälters, unterhalb der geschlossenen Kopfplatte 5 befindet.

Fig. 4 ist eine teilweiser Axialschnitt der Darstellung in Fig. 3. Die sich im Abstand a voneinander befindlichen Blasformhälften 2, 3 des Blasformwerkzeugs 1 weisen jeweils einen Teil der Formkavität 4 auf. Der zwischen den Blasformhälften befindliche Kunststoffschlauchabschnitt ist bei 20 angedeutet. Der durch eine Öffnung in der geschlossenen Kopfplatte 5 in den Kunststoffschlauchabschnitt 20 vorgeschobene Kalibrierblasdorn trägt wiederum das Bezugszeichen 11. Sein Kalibrierbereich ist bei 12 angedeutet und befindet sich unterhalb der geschlossenen Kopfplatte 5.

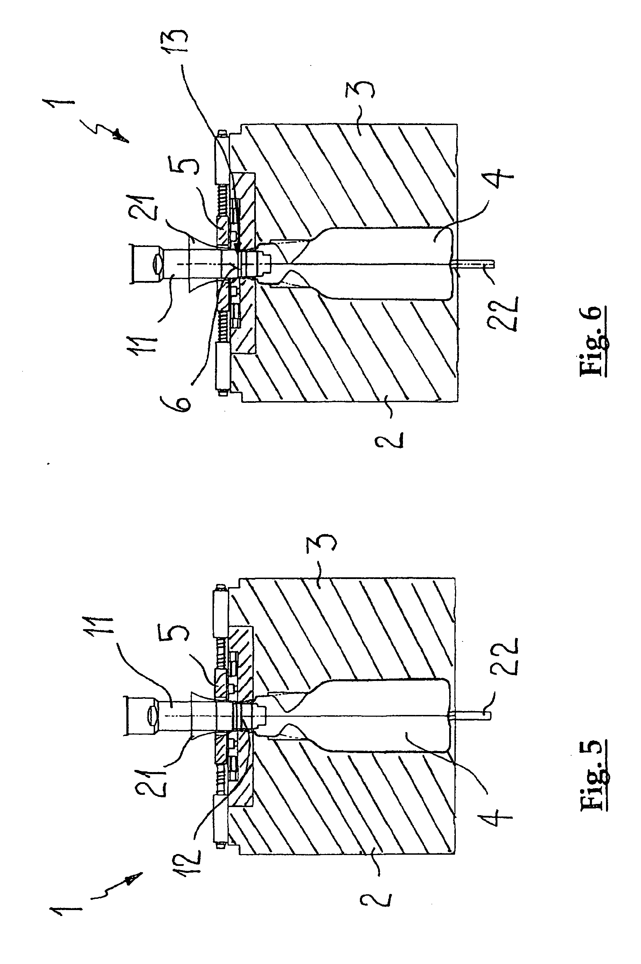

Fig. 5 zeigt das geschlossene Blasformwerkzeug 1, die Blasformhälften 2, 3 sind auf Anschlag zusammengefahren und begrenzen die Formkavität 4, welche die Form des aufzublasenden Kunststoffbehälters festlegt. Der oberhalb der Kopfplatte 5 aus der Formkavität stehende Abschnitt des Kunststoffschlauchabschnitts wird als oberer Butzen 21, der am unteren Ende des Blasformwerkzeugs 1 abragende Abschnitt des Kunststoffschlauchabschnitts wird als unterer Butzen 22 bezeichnet. Der Kunststoffschlauchabschnitt ist im wesentlichen bereits gemäss der Formkavität 4 zu einem Kunststoffbehälter aufgeblasen. Durch das Zusammenfahren der Blasformhälften 2, 3 wird das Kunststoffmaterial im Halsbereich zwischen den Blasformhälften 2, 3 und dem Kalibrierbereich 12 des vorgeschobenen Kalibrierblasdorns 11 radial gequetscht. Dadurch wird der Halsbereich mit der Ausgiessöffnung hinsichtlich seines Innendurchmessers und seiner Innenkontur gemäss dem Kalibrierbereich 12 des Kalibrierblasdorns kalibriert. Die Aussenkontur des Halsbereichs wird gemäss der Ausgestaltung der Formkavität 4 in diesem Bereich geformt. Überschüssiges Kunststoffmaterial wird dabei axial verdrängt. Der Kalibrierblasdorn 11 ist jedoch noch nicht in seine axiale Endposition vorgeschoben, sondern befindet sich in einer Position, die von der Endposition einen axialen Abstand d von etwa 0,3 mm bis etwa 5 mm aufweist.

Die Schnittdarstellung in Fig. 6 entspricht weitgehend derjenigen aus Fig. 5. Nur ist der Kalibrierblasdorn 11 in seine Endpostition vorgeschoben worden, in der ein am Kalibrierblasdorn 11 vorgesehener Schneidring 13 gegen einen ringförmig umlaufenden Anschlag 6 im Blasformwerkzeug 1 gepresst ist. Dabei wird der obere Butzen 21 bereits geschnitten.

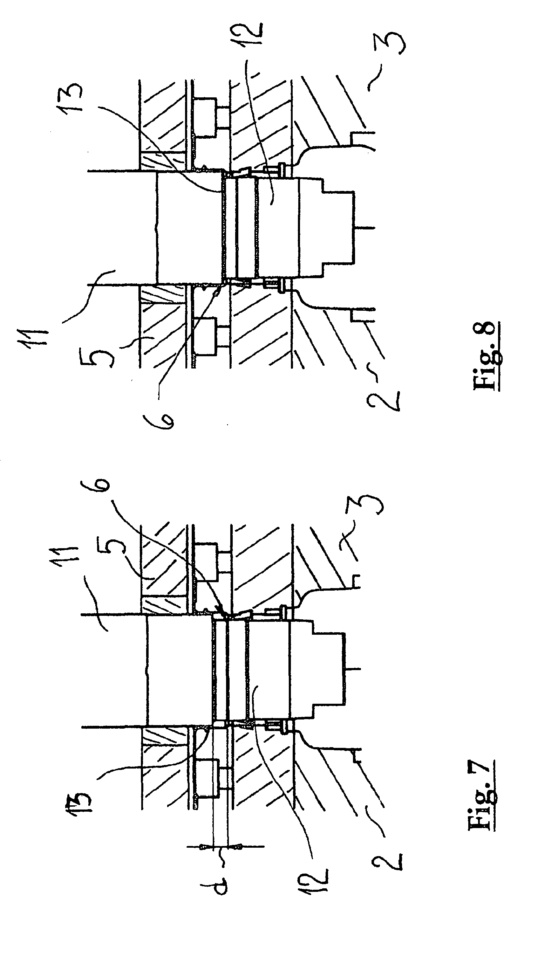

Fig. 7 und 8 zeigen in vergrössertem Massstab die Position des Kalibrierblasdorns 11 vor (Fig. 7) und nach dem Vorschieben in seine axiale Endposition (Fig. 8). Der in Fig. 7 dargestellte axiale Abstand d des Schneidrings 13 vom umlaufenden Anschlag 6 im Blasformwerkzeug beträgt etwa 0,3 mm bis etwa 5 mm. Um diese Wegstrecke muss der Kalibrierblasdorn 11 zum Erreichen seiner Endposition (Fig. 8) nachgefahren werden, in der der Schneidring 13 am umlaufenden Anschlag 6 anliegt. Mit dem Bezugszeichen 12 ist wiederum der Kalibrierbereich am Kalibrierblasdorn 11 bezeichnet. Bei 5 ist die geschlossene Kopfplatte 5 angedeutet. 2 und 3 bezeichnen die beiden Blasformhälften.

Der Kalibrierblasdorn 11 kann während des Kalibrierverfahrens intermittierend vorgeschoben werden, d.h. er wird bis zu seiner vorgesehenen axialen Position im Abstand d von seiner Endposition in den aufzublasenden Kunststoffschlauchabschnitt vorgeschoben, ruht während des vollständigen Zusammenfahrens der Blasformhälften 2, 3 und wird nach dem Schliessen des Blasformwerkzeugs in seine axiale Endposition nachgefahren. In einer alternativen Verfahrensvariante kann der Kalibrierblasdorn 11 auch kontinuierlich vorgeschoben werden, bis er seine axiale Endposition erreicht hat, d.h. dass er auch während des Schliessvorgangs der Blasformhälften kontinuierlich axial vorgeschoben wird. Die axiale Vorschubgeschwindigkeit des Kalibrierblasdorns 11 beträgt etwa 5 mm/s bis etwa 80 mm/s. Diese Vorschubgeschwindigkeit gilt sowohl für den intermittierenden Vorschub als auch für den kontinuierlichen Vorschub des Kalibrierblasdorns 11.

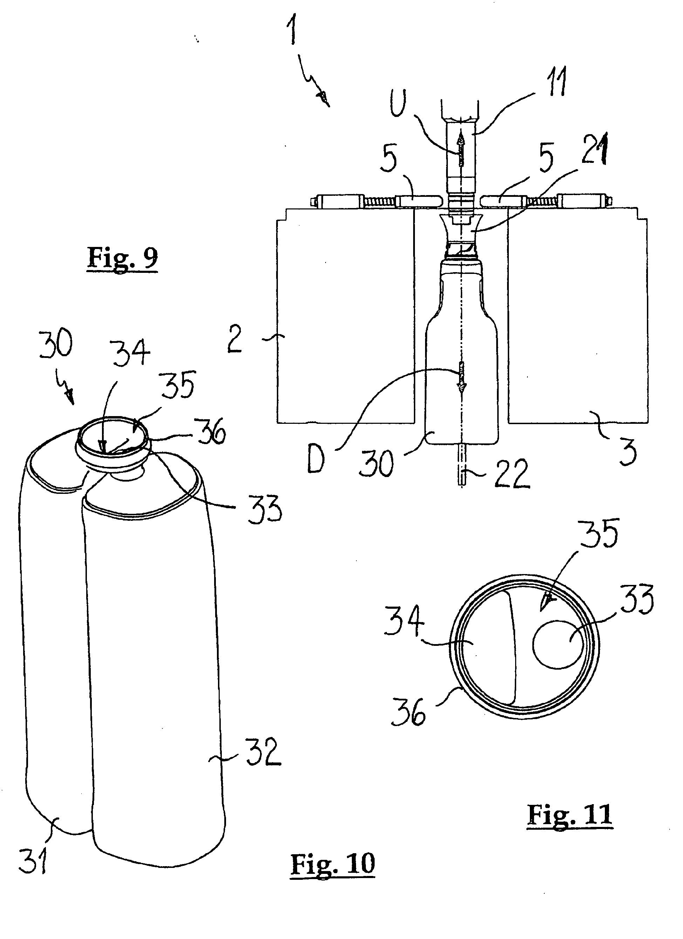

Fig. 9 zeigt eine Ansicht des geöffneten Blasformwerkzeugs 1 mit radial auseinander gefahrenen Blasformhälften 2, 3. Die federbelasteten Kopfplattenelemente der Kopfplatte 5 sind ebenfalls geöffnet. Der Pfeil U deutet an, dass der Kalibrierblasdorn 11 aus dem fertig aufgeblasenen Kunststoffbehälter 30 herausgefahren wird. Der Pfeil D deutet an, dass der Kunststoffbehälter 30 aus dem geöffneten Blasformwerkzeug 1 herausfällt. Bei 21 und 22 sind der vorgeschnittene obere und der untere Butzen angedeutet, die noch entfernt werden müssen.

Fig. 10 zeigt eine beispielsweise Ausführungsvariante eines extrusionsgeblasenen Kunststoffbehälters 30, dessen Ausgiessöffnungen gemäss dem erfindungsgemässen Verfahren kalibriert worden sind. Der Kunststoffbehälter 30 ist ein Zweikammerbehälter mit einer ersten Kammer 31 und einer zweiten Kammer 32. Die erste Kammer 31 weist eine Ausgiessöffnung 34 auf. Die zweite Kammer 32 ist mit einer kleineren Ausgiessöffnung 33 versehen. Ein Hals 36 des Behälters 30 besitzt eine zentrale grössere Ausgiessöffnung 35.

Fig. 11 zeigt eine Aufsicht auf den Hals 36 des Zweikammerbehälters. Die zentrale Ausgiessöffnung 35 am Hals 36 des Behälters und die kleinere Ausgiessöffnung 33 der zweiten Kammer des Behälters weisen einen kreisförmigen Querschnitt auf. Die Ausgiessöffnung 34 der ersten Kammer des Behälters weist eine unregelmässigere, im wesentlichen halbkreisförmige Gestalt auf. Die zentrale Ausgiessöffnung 35 und die kleinere Ausgiessöffnung 33 sind kalibriert. Dies erlaubt es, beispielsweise einen Ausgiessaufsatz zu montieren, der über ein axial vorstehendes Röhrchen dicht mit der kleineren Ausgiessöffnung verbunden ist.

Die Kalibrierung der zentralen Ausgiessöffnung 35 am Hals des Behälters und der kleineren Ausgiessöffnung 33 der ersten Kammer des Behälters erfolgt mit einem Doppel-Kalibrierblasdorn. Dieser weist zwei Teil-Kalibrierblasdorne auf, an denen jeweils Kalibrierbereiche vorgesehen sind. Die Teil-Kalibrierblasdorne sind fest miteinander verbunden und werden gemeinsam vorgeschoben. Der Teil-Kalibrierblasdorn mit dem kleineren Kalibrierdurchmesser überragt dabei den zweiten Teil-Kalibrierdorn für die grössere zentrale Ausgiessöffnung 35. Der Abstand, um den der Teil-Kalibrierdorn mit dem kleineren Kalibrierdurchmesser vorläuft entspricht dabei axialen Abstand der Mündungen der beiden Ausgiessöffnungen 35 und 33. Durch die Verwendung eines Doppel-Kalibrierblasdorns erfolgt das Kalibrieren der beiden Ausgiessöffnungen praktisch zeitgleich.

Das erfindungsgemässe radiale Kalibrierverfahren ist grundsätzlich anstelle der bekannten axialen Kalibrierverfahren bei Kunststoffbehältern mit einer Ausgiessöffnung am Hals des aufgeblasenen Kunststoffbehälters einsetzbar. Auch wenn eine spezielle Innenkontur des Behälterhalses hergestellt werden soll, ist das erfindungsgemässe radiale Kalibrierverfahren gegenüber den Kalibrierverfahren des Stands der Technik zu bevorzugen. Besonders zweckmässig erweist sich das Verfahren insbesondere bei der Verwendung eines Doppel-Kalibrierblasdorns, der zwei Kalibrierbereiche für zwei Ausgiessöffnungen von speziellen Kunststoffbehältern aufweist. Derartige Kunststoffbehälter können beispielsweise zwei Kammern aufweisen. Eine andere Ausführungsvariante des Kunststoffbehälters kann ein im Inneren des Behälters angeordnetes Dosierröhrchen aufweisen, das im Bodenbereich des Behälters mündet. Durch die Verwendung eines Doppel-Kalibrierblasdorns und das erfindungsgemässe radiale Kalibrierverfahren können auch die im Inneren des Behälters angeordnete Ausgiessöffnung des Röhrchens und die Ausgiessöffnung des Halses des Behälters im wesentlichen gleichzeitig bereits beim Blasvorgang des Behälters kalibriert werden. Eine nachträgliche spanabhebende Bearbeitung kann entfallen.

## Patentansprüche

1. Verfahren zur Gewährleistung der Masshaltigkeit, insbesondere zum Kalibrieren, von Ausgiessöffnungen in bzw. an einem in einem Extrusionsblasverfahren hergestellten Kunststoffbehälter (30) mit zwei Ausgiessöffnungen (33, 35), bei welchem ein Abschnitt (20) eines durch eine Extrusionsdüse (9) ein oder mehrschichtig extrudierten Kunststoffschlauchs (10) in eine Formkavität (4) eines Blasformwerkzeugs (1) eingelegt und durch einen Doppel-Kalibrierblasdorn (11), der zwei Kalibrierbereiche aufweist, gemäss der umschlossenen Formkavität (4) aufgeblasen wird, wobei die Ausgiessöffnungen (33, 35) des Kunststoffbehälters hinsichtlich ihres Innendurchmesser und ihrer Innenkontur festgelegt, insbesondere kalibriert, werden, und der fertig aufgeblasene Kunststoffbehälter (30) entformt wird, **dadurch gekennzeichnet, dass** der Doppel-Kalibrierblasdorn (11) axial in den Kunststoffschlauchabschnitt (20) eingefahren wird, nachdem eine Kopfplatte (5) des Blasformwerkzeugs (1) geschlossen wurde, jedoch bevor das Blasformwerkzeug (1) seine vollstandig geschlossene Position erreicht hat, und dass die beiden Ausgiessöffnungen (33, 35) des Kunststoffbehälters (30) im wesentlichen gleichzeitig durch den eingefahrenen Doppel-Kalibrierblasdorn (11) kalibriert werden.

2. Verfahren nach Anspruch 1, **dadurch gekennzeichnet, dass** das Blasformwerkzeug (1) zwei Blasformhälften (2, 3) umfasst und der Doppel-Kalibrierblasdorn (11) axial in den Kunststoffschlauchabschnitt (20) eingefahren wird, während die Blasformhälften (2, 3) einen Abstand (a) voneinander aufweisen, der 0,5 mm bis 10 mm grösser ist, als der Innendurchmesser einer Ausgiessöffnung (35) am Hals (36) des Kunststoffbehälters (30).

3. Verfahren nach einem der vorangehenden Ansprüche, **dadurch gekennzeichnet, dass** der Doppel-Kalibrierblasdorn (11) in eine axiale Position eingefahren wird, die einen axialen Abstand (d) von 0,3 mm bis 5 mm von seiner Endposition aufweist, bevor das Blasformwerkzeug (1) vollständig geschlossen ist, und nach dem vollständigen Schliessen des Blasformwerkzeugs (1) in seine axiale Endposition in den Kunststoffschlauchabschnitt (20) vorgeschoben wird.

4. Verfahren nach einem der vorangehenden Ansprüche, **dadurch gekennzeichnet, dass** der Doppel-Kalibrierblasdorn (11) während des Schliessvorgangs des Blasformwerkzeugs (1) kontinuierlich axial vorgeschoben wird.

5. Verfahren nach Anspruch 4, **dadurch gekennzeichnet, dass** der Doppel-Kalibrierblasdorn (11) mit einer Geschwindigkeit von etwa 5 mm/s bis etwa 80 mm/s axial vorgeschoben wird.

6. Verfahren nach einem der vorangehenden Ansprüche, **dadurch gekennzeichnet, dass** die Kalibrierbereiche des Doppel-Kalibrierblasdorns miteinander gekoppelt axial vorgeschoben werden.

7. Verfahren nach einem der vorangehenden Ansprüche, **dadurch gekennzeichnet, dass** die Kalibrierbereiche des Doppel-Kalibrierblasdorns in unterschiedlicher axialer Höhe angeordnet werden.

8. Verfahren nach einem der vorangehenden Ansprüche, **dadurch gekennzeichnet, dass** die Kalibrierbereiche des Doppel-Kalibrierblasdorns mit voneinander verschiedenen Aussendurchmessern ausgebildet werden.

9. Verfahren nach Anspruch 8, **dadurch gekennzeichnet, dass** ein Kalibrierbereich des Doppel-Kalibrierblasdorns mit dem kleineren Aussendurchmesser zur Kalibrierung einer im Inneren des Kunststoffschlauchabschnitts (20) vorgesehenen Ausgiessöffnung eingesetzt wird.

10. Verfahren nach Anspruch 9, **dadurch gekennzeichnet, dass** mit Hilfe des Kalibrierbereichs des Doppel-Kalibrierblasdorns mit dem kleineren Aussendurchmesser ein Ausgangs eines Dosierröhrchens kalibriert wird, welches im Bodenbereich des aus dem Kunststoffschlauchabschnitt aufzublasenden Kunststoffbehälters mündet und zur Anbindung einer Dosierkammer eines auf den Hals des Behälters aufsteckbaren Ausgiessaufsatzes vorgesehen ist.

## Claims

1. Method for ensuring the dimensional accuracy of, more particularly for calibrating, spout openings in or on a plastics container (30) having two spout openings (33, 35) which is produced by an extrusion blow moulding method, wherein a section (20) of a plastics tube (10) extruded in one or more layers through an extrusion die (9) is placed in a mould cavity (4) of a blow moulding tool (1) and is blow-moulded by a double calibrating blow mandrel (11), which comprises two calibrating regions, to conform to the enclosed mould cavity, the spout openings (33, 35) of the plastics container being determined, particularly calibrated, in respect of their internal diameter and their inner contour, and the finished blow-moulded plastics container (30) being removed from the mould, **characterised in that** the double calibrating blow mandrel (11) is inserted axially into the plastics tube section (20) after a cover plate (5) of the blow moulding tool (1) has been closed but before the blow moulding tool (1) has reached its fully closed position, and **in that** the two spout openings (33, 35) of the plastics container (30) are calibrated substantially simultaneously by the inserted double calibrating blow mandrel (11).

2. Method according to claim 1, **characterised in that** the blow moulding tool (1) comprises two blow mould halves (2, 3) and the double calibrating blow mandrel (11) is inserted axially into the plastics tube section (20), while the blow mould halves (2, 3) are at a spacing (a) from one another which is 0.5 mm to 10 mm greater than the internal diameter of a spout opening (35) on the neck (36) of the plastics container (30).

3. Method according to one of the preceding claims, **characterised in that** the double calibrating blow mandrel (11) is moved into an axial position which is at an axial spacing (d) of 0.3 mm to 5 mm from its end position before the blow moulding tool (1) has been closed completely, and after the blow moulding tool (1) has been closed completely it is advanced into its axial end position in the plastics tube section (20).

4. Method according to one of the preceding claims, **characterised in that** the double calibrating blow mandrel (11) is advanced continuously in the axial direction during the process of closing the blow moulding tool (1).

5. Method according to claim 4, **characterised in that** the double calibrating blow mandrel (11) advances axially at a speed of about 5 mm/s to about 80 mm/s.

6. Method according to one of the preceding claims, **characterised in that** the calibrating regions of the double calibrating blow mandrel are advanced axially while coupled together.

7. Method according to one of the preceding claims, **characterised in that** the calibrating regions of the double calibrating blow mandrel are arranged at different axial heights.

8. Method according to one of the preceding claims, **characterised in that** the calibrating regions of the double calibrating blow mandrel are embodied with different external diameters from one another.

9. Method according to claim 8, **characterised in that** a calibrating region of the double calibrating blow mandrel with the smaller external diameter is used to calibrate a spout opening provided inside the plastics tube section (20).

10. Method according to claim 9, **characterised in that** the calibrating region of the double calibrating blow mandrel with the smaller external diameter is used to calibrate an outlet of a metering tube which terminates in the region of the bottom of the plastics container that is to be blow-moulded from the plastics tube section and which is provided for attaching a metering chamber of a spout attachment that can be fitted to the neck of the container.

## Revendications

1. Procédé pour garantir le respect des dimensions, en particulier pour le calibrage, d'ouvertures de versement dans ou sur un récipient en matière plastique (30) fabriqué par un procédé d'extrusion-soufflage et doté de deux ouvertures de versement (33, 35), procédé selon lequel un tronçon (20) d'une gaine tubulaire en matière plastique (10), extrudée en une ou plusieurs couches par une filière d'extrusion (9), est placée dans une empreinte (4) d'un outillage de moulage par soufflage (1) et est gonflée par un double mandrin de soufflage et de calibrage (11), qui présente deux zones de calibrage, en fonction de l'empreinte (4) qui l'entoure, les ouvertures de versement (33, 35) du récipient en plastique étant définies, en particulier calibrées, en ce qui concerne leur diamètre intérieur et leur contour intérieur, et le récipient en plastique (30) soufflé et terminé étant démoulé, **caractérisé en ce que** le double mandrin de soufflage et de calibrage (11) est engagé axialement dans le tronçon de gaine tubulaire en plastique (20), après la fermeture d'une plaque de recouvrement (5) de l'outillage de moulage par soufflage (1), mais avant que l'outillage de moulage par soufflage (1) n'ait atteint sa position complètement fermée, et **en ce que** les deux ouvertures de versement (33, 35) du récipient en plastique (30) sont calibrées sensiblement en même temps par le double mandrin de soufflage et de calibrage (11) engagé.

2. Procédé selon la revendication 1, **caractérisé en ce que** l'outillage de moulage par soufflage (1) comprend deux demi-coquilles de moule de soufflage (2, 3) et le double mandrin de soufflage et de calibrage (11) est engagé axialement dans le tronçon de gaine tubulaire en plastique (20), tandis que les demi-coquilles de moule de soufflage (2, 3) présentent une distance (a) réciproque qui est supérieure de 0,5 mm à 10 mm au diamètre intérieur d'une ouverture de versement (35) sur le col (36) du récipient en plastique (30).

3. Procédé selon l'une des revendications précédentes, **caractérisé en ce que** le double mandrin de soufflage et de calibrage (11) est engagé jusqu'à une position axiale qui présente une distance axiale (d) de 0,3 mm à 5 mm de sa position finale, avant que l'outillage de moulage par soufflage (1) ne soit fermé complètement, et est avancé dans sa position finale axiale dans le tronçon de gaine tubulaire en plastique (20), après la fermeture complète de l'outillage de moulage par soufflage (1).

4. Procédé selon l'une des revendications précédentes, **caractérisé en ce que** le double mandrin de soufflage et de calibrage (11) est avancé axialement de façon continue pendant l'opération de fermeture de l'outillage de moulage par soufflage (1).

5. Procédé selon la revendication 4, **caractérisé en ce que** le double mandrin de soufflage et de calibrage (11) est avancé axialement à une vitesse allant d'environ 5 mm/s à environ 80 mm/s.

6. Procédé selon l'une des revendications précédentes, **caractérisé en ce que** les zones de calibrage du double mandrin de soufflage et de calibrage sont avancées axialement en étant couplées l'une à l'autre.

7. Procédé selon l'une des revendications précédentes, **caractérisé en ce que** les zones de calibrage du double mandrin de soufflage et de calibrage sont disposées à des hauteurs axiales différentes.

8. Procédé selon l'une des revendications précédentes, **caractérisé en ce que** les zones de calibrage du double mandrin de soufflage et de calibrage sont réalisées avec des diamètres extérieurs différents.

9. Procédé selon la revendication 8, **caractérisé en ce qu'**une zone de calibrage du double mandrin de soufflage et de calibrage présentant le plus petit diamètre extérieur est utilisée pour le calibrage d'une ouverture de versement prévue à l'intérieur du tronçon de gaine tubulaire en plastique (20).

10. Procédé selon la revendication 9, **caractérisé en ce que** la zone de calibrage du double mandrin de soufflage et de calibrage présentant le plus petit diamètre extérieur permet de calibrer une sortie d'un petit tube de dosage, qui débouche dans la région du fond du récipient en plastique à réaliser par soufflage à partir du tronçon de gaine tubulaire en plastique et est prévue pour le raccordement d'un compartiment de dosage d'un capuchon de versement pouvant être rapporté sur le col du récipient.
